Europäisches Patentamt

European Patent Office

Office européen des brevets

(19)

(11) EP 0 760 088 B1

(12) **FASCICULE DE BREVET EUROPEEN**

(45) Date de publication et mention
de la délivrance du brevet:
**02.09.1998 Bulletin 1998/36**

(21) Numéro de dépôt: **95920143.5**

(22) Date de dépôt: **15.05.1995**

(51) Int Cl.⁶: **G01K 11/06**

(86) Numéro de dépôt international:
**PCT/FR95/00628**

(87) Numéro de publication internationale:
**WO 95/31704 (23.11.1995 Gazette 1995/50)**

(54) **DISPOSITIF AUTONOME DE CONTROLE DE TEMPERATURES LIMITES LORS DU TRANSPORT DES DENREES PERISSABLES**

AUTONOME ÜBERWACHUNGSVORRICHTUNG VON GRENZTEMPERATUREN BEIM TRANSPORT VON VERDERBLICHEN NAHRUNGSMITTELN

SELF-CONTAINED DEVICE FOR CONTROLLING LIMIT TEMPERATURES DURING THE TRANSPORT OF PERISHABLE FOODSTUFFS

(84) Etats contractants désignés:
**DE FR GB**

(30) Priorité: **17.05.1994 FR 9405998**
**21.10.1994 FR 9412631**

(43) Date de publication de la demande:
**05.03.1997 Bulletin 1997/10**

(73) Titulaire: **PREMARK FEG CORPORATION**
**Troy, OH 45374-0001 (US)**

(72) Inventeur: **TIBY, Gérard**
**F-94370 Sucy-en-Brie (FR)**

(74) Mandataire: **Desaix, Anne et al**
**Ernest Gutmann - Yves Plasseraud S.A.**
**3, rue Chauveau-Lagarde**
**75008 Paris (FR)**

(56) Documents cités:
**FR-A- 2 472 741        FR-A- 2 608 278**
**FR-A- 2 676 532**

## Description

La présente invention est relative à un moyen de contrôle des écarts de températures au-delà des limites acceptables par la réglementation lors du transport des denrées périssables du type denrées alimentaires ou produits d'hygiènes, pharmaceutiques ou diagnostiques.

Le transport des denrées périssables nécessite de s'assurer que les normes d'écarts autorisés de température pour chaque produit ne seront en aucun cas dépassée lors de du transport.

Ce type de contrôle est rendu obligatoire dans les pays européens notamment par la directive 92/1/CEE du 13 janvier 1992, relative aux aliments surgelés et qui stipule dans son article 2 que "pendant leur utilisation, les moyens de transport et les locaux d'entreposage doivent être équipés d'instruments appropriés d'enregistrement automatique de la température pour mesurer fréquemment et à intervalles réguliers la température de l'air à laquelle sont soumises les denrées surgelées destinées à l'alimentation humaine". En outre la directive 93/43/CEE du 14/06/93 stipule dans son article 3 que les entreprises du secteur alimentaire doivent notamment "mettre en évidence les niveaux et moments (les points) de l'opération où des risques alimentaires peuvent se présenter, établir quels points parmi ceux qui ont été mis en évidence sont déterminants pour la sécurité alimentaire (points critiques), définir et mettre en oeuvre des procédures de vérifications et de suivis efficaces au niveau de ces points critiques. Il est fortement recommandé dans cette directive la mise en place de guides de bonnes pratiques d'hygiène qui contiendraient les mesures nécessaires pour garantir la sécurité et la salubrité des denrées périssables.

Compte tenu de cette directive, les responsables des établissements de distribution, de restauration et d'activités non sédentaires et occasionnels, doivent procéder à des contrôles réguliers pour vérifier la conformité des denrées aux dispositions de la législation en vigueur. La mise en place des moyens de contrôle doit être ensuite effectuée par les états membres en suivant directement les directives ou en utilisant d'autres méthodes scientifiquement valables à condition que les produits et leurs circulations répondent à la réglementation en vigueur.

Si un risque majeur lié au respect de la température maximale existe lors du transport lui-même, le même risque existe avant et après le transport c'est-à-dire pendant les périodes de chargement, déchargement, d'attente et de stockage.

Les différents moyens de contrôle et d'enregistrement rendus obligatoires par la directive 92/1 dans son article 2 sont l'équipement des moyens de transport et des locaux d'entreposage avec des enregistreurs automatiques de températures permettant de mesurer à intervalles réguliers la température de l'air à laquelle sont soumises les denrées surgelées ou réfrigérées destinées à la consommation humaine ; mais ces appareils sont souvent coûteux, sophistiqués et d'exploitation non instantanée ce qui rend leur utilisation et le contrôle de cette utilisation particulièrement difficiles compte tenu des conditions de ce type de denrées et notamment sa dispersion au niveau géographique.

Dans tout ce qui précède et ce qui suit, on appellera "denrée" toute denrée alimentaire périssable sous température dirigée notamment les produits congelés ou les produits réfrigérés, ainsi que des produits destinés à la santé humaine ou animale nécessitant pour leur bonne conservation le maintien également sous température dirigée, notamment les produits thérapeutiques et diagnostiques ; de façon plus générale, le terme de denrées dont il sera fait mention dans cette demande de brevet fera référence à tout type de produit dont le maintien à une certaine température est rendu obligatoire soit pour des raisons réglementaires, soit pour des raisons techniques de conservation d'une activité ou d'une intégrité de ladite denrée, soit pour des raisons hygiéniques. Un dispositif autonome de contrôle des écarts de température dans une enceinte à température dirigée correspondant au préambule de la revendication 1 est connue de FR-A-2 608 278.

Le dispositif décrit ci-après et objet de la présente invention correspond à la démarche qui est de satisfaire aux exigences pouvant naître de l'application des directives européennes citées ci-dessus et notamment du système HACCP (Hazard Analysis Critical Control Point c'est-à-dire Analyse des Risques, Points Critiques pour leur maîtrise).

La suite de l'exposé sera faite par référence aux figures ci-jointes et dont les légendes sont les suivantes :

-    La figure i est une représentation schématique d'un dispositif tel qu'il peut être à l'état initial $t_0$ ou à l'état final $t_1$. Le réservoir (1) et l'élément de liaison du réservoir avec le réceptacle (2) contient la substance (4) à l'état solide, et le réceptacle (2) est vide. A l'état final, $t_1$ le contenu du conduit (3) et partiellement ou totalement du réservoir (1) a été décongelé et se retrouve dans le réceptacle (2).

-    La figure 2 représente les différents types de configuration, la figure 2A étant une configuration permettant de détecter une élévation rapide de température pendant une courte durée, la figure 2B permettant de détecter une augmentation de température plus ou moins importante mais pendant une longue durée, la figure 2C étant une combinaison des deux précédentes.

-    La figure 3 représente une première réalisation préférentielle du dispositif,

-    La figure 4A représente une deuxième réalisation préférentielle dans laquelle le rapport de la surface entre le dispositif et l'air ambiant et du volume du réservoir est augmenté,

-    La figure 5 représente un mode de réalisation simplifié permettant de détecter une élévation de température entraînant la décongélation de la substance ; la figure 5A montre un dispositif associable à celui de la figure 3 et la figure 5B montre un dispositif associable à celui de la figure 4.

- Les figures 6A et 6B sont deux exemples de réalisation de bouchons adaptables aux dispositifs représentés dans les figures 3 et 5A.

La présente invention est relative à un dispositif autonome de contrôle des écarts de température dans une enceinte à température dirigée, comportant un contenant comprenant un réservoir relié à un réceptacle dont les espaces intérieurs communiquent entre eux, au moins un moyen de remplissage du contenant, et un contenu constitué d'une matière solidifiée dont la température de fusion est constante et dont le volume total est inférieur au volume global du réservoir, ledit contenant étant au moins en partie constitué par une matière autorisant les échanges thermiques avec l'extérieur. Les espaces intérieurs communiquent par deux conduits à section plus réduite, l'un des conduits permet l'écoulement de la substance du réservoir vers le réceptacle et l'autre conduit permet l'écoulement de l'air du réceptacle vers le réservoir.

Dans un mode de réalisation préféré, en position d'utilisation le réservoir est sensiblement à l'aplomb du réceptacle, le réceptacle pouvant à son tour devenir réservoir et vice-versa par retournement ou pivotement à 180°.

Il peut être est avantageux, dans un certain mode de réalisation que le réservoir comporte un moyen permettant à la matière en l'état solide d'être correctement maintenue et de ne pas risquer, sous l'effet de la pesanteur, d'obturer l'un ou l'autre des conduits. Ce moyen est constitué d'une surface dont l'aplomb du périmètre est extérieur au périmètre du ou des conduits de communication entre le réservoir et le réceptacle, ladite surface étant fixée au réservoir par tout moyen approprié ; ce moyen peut être :

- une surface plane ou courbe, munies de perforations, de rugosités, de crochets ou tout autre moyen capable d'augmenter les forces de frottement entre la matière à l'état solide et les constituants du réservoir ;
- des lamelles parallèles ou croisées maintenant la surface au réservoir tout en laissant la possibilité à la matière initialement solide de s'écouler librement en cas de fusion.

Le réservoir devient réceptacle par retournement et réciproquement. Le dispositif est donc symétrique autour d'un plan horizontal.

Le moyen de remplissage du dispositif selon l'invention est soit un orifice susceptible d'être bouché, soit un système étanche de fixation du réceptacle au réservoir.

De manière avantageuse, réservoir et réceptacle sont fermés par un bouchon auquel est fixée la surface de maintien de la matière. Réservoir et réceptacle peuvent également être fixés ensemble au niveau de l'axe de symétrie central notamment par vissage ou emboitage.

Enfin, le réservoir et le réceptacle peuvent comporter des graduations permettant de quantifier le produit [durée x température] du dépassement de la température de fusion.

L'invention est également relative à un dispositif caractérisé en ce que le réservoir est muni d'un moyen de rétention de la substance à l'état solide dans la partie haute du dispositif.

Ce moyen de rétention peut être constitué d'une plaque munie de perforations ou d'aspérités, et d'une surface sensiblement perpendiculaire au sens de la pesanteur et dont le périmètre est tel que la substance fondue peut s'écouler du réservoir vers le réceptacle le long de la paroi du réservoir sans risque d'obturation directe des deux conduits.

Le dispositif dont les caractéristiques générales sont décrites ci-dessus est plus particulièrement caractérisé en ce que la matière est un eutectique. L'eutectique est un mélange de deux ou plusieurs constituants ayant un point de fusion non nécessairement au-dessous de ceux des constituants, qui est toujours à température fixe et de composition constante pour un mélange donné ; une substance à l'état pur comme notamment l'eau remplit la même fonction qui est la constance de sa température de fusion à une pression donnée lorsqu'elle a été préalablement congelée ; aussi la substance contenue dans le dispositif de la présente invention peut également être une substance à l'état pur à partir du moment où sa température de fusion est constante dans des conditions de pression ambiante déterminée : le terme eutectique utilisé par la suite sera soit un eutectique tel que défini ci-dessus, soit une substance quelconque ayant les mêmes propriétés.

Par substance, on entend toute matière dont le contenu du dispositif est pourvu de la propriété recherchée qui est celle d'un eutectique ou d'une substance pure.

Le contenu du dispositif sera donc désigné par l'un des trois termes matière, substance ou eutectique, et aura toujours la même propriété de fusion à température constante. ladite température étant comprise en général entre -40°C et +20°C.

Un tel dispositif peut être placé dans une enceinte dont on veut contrôler la température ambiante ; la cavité supérieure ou réservoir est remplie alors d'un eutectique déterminé dont la température de fusion est (t°f) ; si l'ensemble de ce dispositif est soumis préalablement à une température inférieure à (t°f), l'eutectique va être à l'état solide ; il apparaît clairement que s'il est soumis à une température ambiante (t°a) supérieure à (t°f), l'eutectique va se liquéfier et la phase liquide viendra se loger par gravité dans la cavité inférieure ou réceptacle; c'est donc par simple action de la pesanteur que l'eutectique fondu sous l'action d'une évaluation de température au-dessus de la température de fusion de l'eutectique, va s'accumuler dans le réceptacle, la quantité d'eutectique présent à un moment donné dans ledit réceptacle est alors un indicateur du produit de la différence de température entre (t°a) et (t°f) et de la durée pendant laquelle l'enceinte dans laquelle est disposé le dispositif a été hors des températures dirigées limites autorisées par les normes de conservation des produits contenus dans ladite enceinte.

Le volume de substance recueilli dans le réceptacle sera donc d'autant plus important que :

- la différence dθ entre la température ambiante (t°a) et la température (t°f) sera grande,
- le temps dt pendant lequel dθ est positif.
- la chaleur latente de fusion Cf de la substance,
- le coefficient K global moyen de transmission thermique du dispositif est élevé.

Le coefficient K est défini dans l'arrêté du 1er février 1974 publié au Journal Officiel de la République Française du 20 mars 1974 et défini par la formule suivante :

$$K = \frac{W}{S} \, d\theta$$

où

W est la puissance thermique dépensée à l'intérieur du dispositif et
S est la surface d'échange entre le dispositif et l'enceinte dont la température doit être surveillée.

Il est clair que, le volume étant proportionnel à W, plus la surface d'échange tehermique avec l'extérieur est importante par rapport au volume de substance , plus le coefficient global de transmission thermique est faible.
Si Qe est la quantité d'énergie échangée entre le milieu ambiant de l'enceinte à température dirigée et le dispositif, la formule suivante peut donc être appliquée pour connaître cette quantité :

$$Qe = K \int_{o}^{t} (d\theta \times dt)$$

La masse de la substance recueillie dans le réceptacle appelée mr, est proportionnelle à Qe et inversement proportionnelle à Cf, c'est-à-dire à la chaleur latente de fusion de la substance, selon la formule :

$$mr = \frac{Q_e}{C_f}$$

Il apparaît clairement que ce dispositif qui intègre à la fois la température de dépassement et le temps de dépassement est représentatif d'une réalité qui est une intégration de l'état global dans lequel les denrées qui se trouvent à l'intérieur de l'enceinte à température dirigée ont été en dehors des normes de conservation de ladite denrée.

Les substances eutectiques avantageusement utilisables sont les substances ayant un point de fusion à une température négative pour ce qui est des contrôles des enceintes à température dirigée permettant la conservation des produits surgelés ou congelés, ou une substance dont la température de fusion est comprise en 0° et 8° pour le contrôle des températures dans les enceintes à température dirigée destinées à conserver des produits frais ; il est bien sûr tout à fait envisageable d'équiper des enceintes à température dirigée avec des eutectiques à températures de fusion supérieures à 8° pour des denrées dont la conservation, supérieure à 8°, nécessite malgré tout une stabilité de température. On peut citer à titre d'exemple certains types de fromages ou de vins dont la température de conservation peut se situer entre 10° et 20°.

A titre d'exemple d'eutectiques utilisables, on citera les eutectiques de type Alcal, notamment Alcal 8, et commercialisés par la société SOFRIGAM, 88 rue Danton, 92400 Courbevoie, France, ou d'une manière plus générale, tout liquide eutectique dont la composition pourra être avantageusement utilisée dans le dispositif de l'invention, et notamment ceux dont la température de fusion est comprise entre - 40°C et + 20°C.

Dans une forme de réalisation du dispositif selon l'invention, le réservoir et le réceptacle sont constitués d'un matériau transparent ou translucide permettant la visualisation de la présence ou de l'absence de l'eutectique soit à l'état congelé soit à l'état liquide ; ce matériau peut être une matière plastique ou composite, telle le PCV cristal, le polyethylène cristal ou le polypropylène ; le choix du matériau dépend de la température de l'enceinte abritant le dispositif et l'homme du métier saura trouver le matériau transparent ou translucide le mieux adapté à la destination du dispositif.

De façon optionnelle, le réservoir et/ou le réceptacle peuvent être munis de graduations destinées à mesurer de façon précise le volume de la substance qu'ils contiennent ou qu'ils sont susceptibles de contenir suite à un dépassement de la température de fusion.

De manière avantageuse également, la substance peut être colorée, chaque couleur correspondant à un eutectique donné et par voie de conséquence à une température de fusion donnée ; ainsi chaque dépassement d'une température limite correspondant à la température de fusion de l'eutectique pourra être associé à une couleur éventuellement présente dans le réceptacle du dispositif.

De façon optionnelle et guidé par certains types d'utilisations, le dispositif de l'invention qui permet de mesurer le produit (dθ x dt) peut être associé à un témoin de décongélation. Ce témoin est constitué d'un récipient fermé et d'un moyen permettant à l'eutectique d'être maintenu à l'état solide dans la partie supérieure dudit récipient. Ce moyen peut être une plaque munie de perforations ou d'aspérités, il peut être une grille ou tout moyen, notamment ceux décrits pour le réservoir du dispositif principal dont la fonction est de retenir l'eutectique à l'état solide dans la partie supérieure du récipient. Si la température de fusion a été dépassée, une certaine quantité d'eutectique se trouvera alors dans la zone basse du récipient.

Ce type de dispositif peut présenter une surface d'échanges thermiques avec l'enceinte à température dirigée plus ou moins importante en fonction du type de réponse recherchée.

On peut aussi imaginer qu'une enceinte à température dirigée pourra contenir plusieurs dispositifs selon l'invention, chaque dispositif étant lui-même caractérisé par la présence d'un eutectique à température de fusion définie, chacun étant différent des autres et reconnaissable par exemple par sa couleur ou par un marquage du dispositif. Il sera ainsi aisé pour l'utilisateur de déterminer la température maximale atteinte dans l'enceinte entre deux moments $t_0$ et $t_1$ par exemple.

Il apparaîtra clairement au vu de ce qui précède et notamment de la formule indiquant la quantité d'énergie échangée entre le milieu ambiant et le dispositif que le volume d'eutectique recueilli dans le réceptacle est une fonction du produit [dθ x dt], dθ représentant la différence de température entre la température ambiante et la température de fusion de la substance, et dt représentant la durée pendant laquelle dθ est positif.

Un dispositif selon l'invention ne comprenant qu'un seul conduit est caractérisé également en ce que ledit conduit de liaison entre le réservoir et le réceptacle est constitué d'un matériau à conductibilité thermique élevée, notamment un métal, un alliage métallique ou une matière plastique ou une combinaison de ceux-ci ; ce conduit sera de préférence rempli dans toute sa longueur par la substance. mais peut n'être rempli que partiellement.

En agissant sur les différents paramètres physiques et notamment de géométrie du dispositif comprenant ces trois éléments réservoir, réceptacle, élément de liaison, l'homme du métier pourra adapter le dispositif à ses besoins :

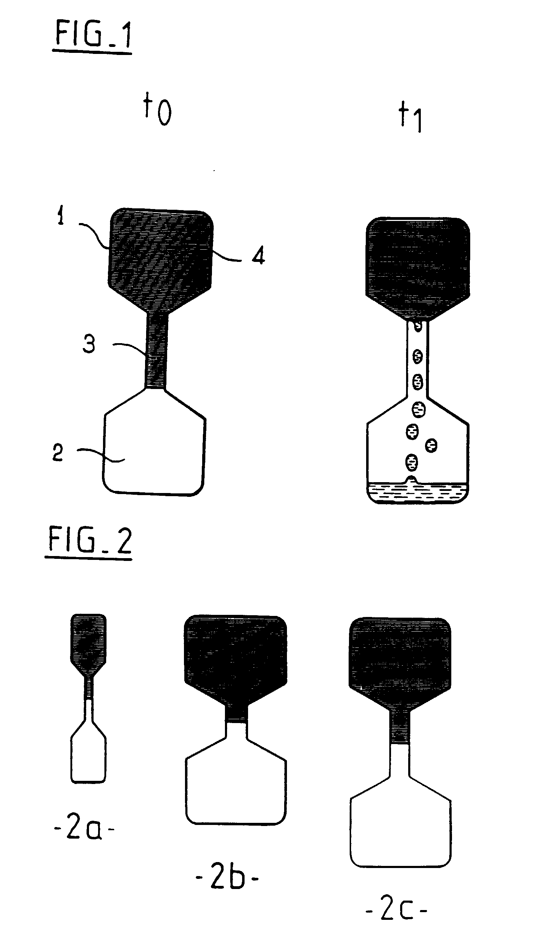

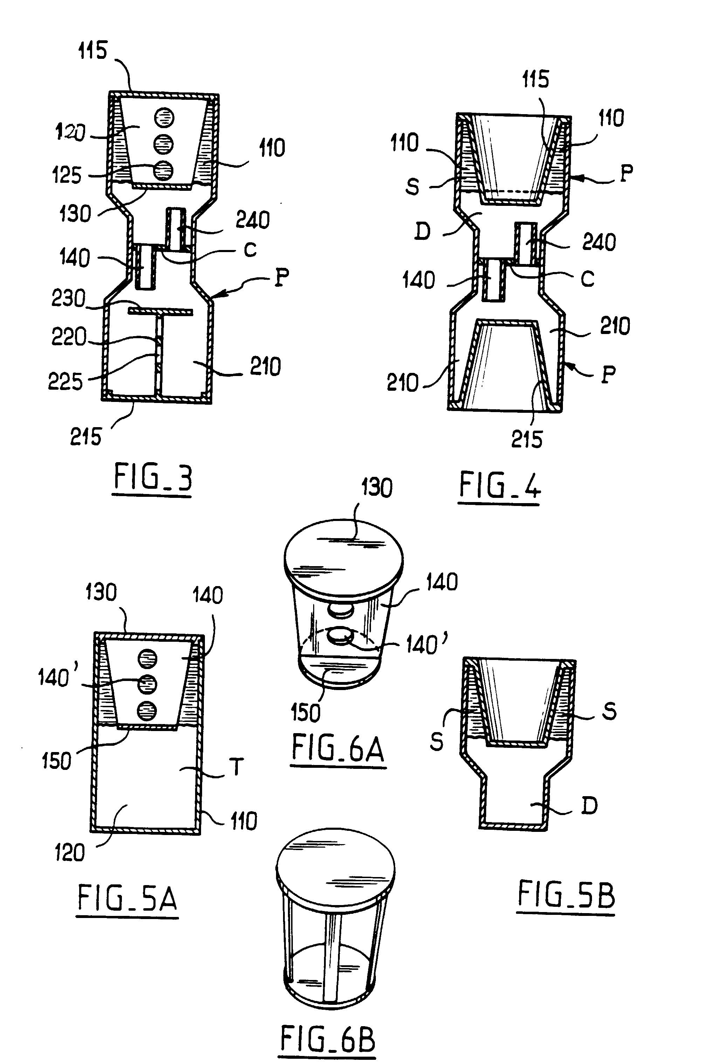

si par exemple et à titre non limitatif, il souhaite contrôler le dépassement d'une température relativement élevée pendant un temps très court, le dispositif aura un volume global faible et notamment un volume d'eutectique faible tel que représenté dans les figures 2A et 4, permettant un échange thermique important et rapide avec l'extérieur ;

si au contraire l'homme du métier cherche à mesurer un dépassement peu important mais de longue durée, alors il aura intérêt à avoir une configuration géométrique du dispositif autorisant un volume important de substance dans le réservoir, comme ceci est représenté dans les figures 2B et 3.

Si enfin l'homme du métier souhaite combiner ces deux objectifs, à savoir contrôler à la fois un dépassement de température élevée pendant un temps long, il sera nécessaire que le dispositif soit constitué de telle façon qu'il puisse contenir un volume important de substance dans le réservoir mais également avoir un élément de liaison ayant un rapport surface d'échange sur volume d'eutectique important tel que ceci est représenté dans les figures 2C ou 3.

L'homme du métier pourra aisément concevoir la géométrie du dispositif en fonction d'un objectif donné.

Ce dispositif de l'invention présente également l'avantage d'être peu cher de fabrication et aussi d'être utilisable un nombre important de fois puisqu'il suffit de recongeler la substance quand elle est à l'état liquide dans le réceptacle puis revenir en position d'origine par retournement à 180° avant tout nouvelle utilisation. Enfin, afin de répondre aux normes de sécurité et aux bonnes pratiques d'hygiène, ce dispositif pourra être associé avec un autre dispositif de détrompage qui exclut le retournement du dispositif lorsqu'il est en service.

Si besoin est, un dispositif simplifié tel que représenté sur la figure 5 permet de mesurer l'existence d'un Δθ positif indépendamment du Δt : ce dispositif est constitué uniquement d'un contenant qui comme les dispositifs précédents est constitué d'une matière permettant des échanges thermiques élevés avec l'extérieur, et d'un contenu constitué d'une substance solidifiée et positionnée de telle façon que sa liquéfaction soit visible ou mesurable.

Les deux exemples de réalisation ci-dessous permettront au lecteur de mieux appréhender tout l'avantage de ce type de dispositif. Deux exemples de géométrie sont indiqués, mais bien entendu l'homme du métier pourra adapter la géométrie de son dispositif en fonction du besoin précis en terme de surveillance des écarts de température qu'il souhaite assurer dans une enceinte à température dirigée donnée.

<u>Exemple de réalisation n° 1:</u>

Cet exemple est illustré par la figure 3. Les numérotations sont à trois chiffres, le premier chiffre, celui des centaines est le 1 pour tout élément concernant le réservoir et le 2 pour tout élément concernant le réceptacle, les deux chiffres suivants (dizaines et unités) sont strictement identiques pour les éléments eux-mêmes symétriques se trouvant être ceux du réservoir lorsqu'ils sont en position haute et ceux du réceptacle lorsqu'ils sont en position basse.

Le dispositif (D) est constitué d'un réservoir (110) et d'un réceptacle (210) constitué d'une paroi (P) dans un matériau transparent ou translucide, à conductivité élevée et résistant aux écarts de température, d'une cloison (C) séparant le réservoir (110) et le réceptacle (210), la cloison (C) étant le support du conduit (140) permettant à l'eutectique de s'écouler du réservoir (110) au réceptacle (210) et du conduit (240) permettent à l'air de s'échapper du réceptacle vers le réservoir.

A un couvercle (115) ou (215) est fixée une paroi (120) ou (220) laquelle paroi est perforée par des trous (125) ou (225) et fixée à une surface (130) ou (230) dont l'aplomb du périmètre est extérieur à celui des deux conduits (140) et (240). De façon préférée la surface (130) ou (230) est une surface circulaire de diamètre 14mm, sensiblement identique au diamètre de la cloison (C).

L'eutectique à l'état congelé dans le réservoir (110) occupe le volume compris entre le couvercle (115), la surface (130) et la paroi (P). Lorsque la température dépasse la température de fusion de l'eutectique, l'élément l'eutectique fondu s'écoule entre la surface (130) et la cloison (C) le long de ladite cloison pour s'écouler dans le conduit (140) dans le réceptacle (210).

Le conduit (240) reliant le réceptacle au réservoir permet à l'air de s'échapper du réceptacle (210) vers le réservoir (110) simultanément à l'écoulement de l'eutectique du réservoir (110) vers le réceptacle (210). La faible distance (ici 5mm) entre la partie supérieure du conduit (240) et la surface (130) permet d'éviter que l'eutectique s'écoule à la fois par les deux conduits et permet donc le maintien d'une pression égale entre le réservoir (110) et le réceptacle (210) tout au long de l'utilisation du dispositif (D).

Le diamètre intérieur des deux conduits (140) et (240) doit être suffisant même en cas de viscosités importantes de l'eutectique en liquéfaction pour éviter le colmatage desdits conduits. Le dispositif (D) de la figure 3 est un dispositif dont le rapport de taille hauteur totale/diamètre est d'environ 3 mm.

Mais toute modification globale de géométrie telle que représentée dans la figure 2 est bien sûr envisageable dans ce type de dispositif.

La parfaite symétrie du système en cas de retournement apparaît ici encore à l'examen de la figure.

## Exemple de réalisation n° 2

Cet exemple est illustré par la figure 4.

Le principe de la numérotation des éléments du dispositif illustré dans cette figure est le même que celui de la figure 3. La différence essentielle entre les deux dispositifs est la géométrie qui permet une surface d'échange thermique avec l'enceinte plus importante.

Le dispositif (D) est constitué d'un réservoir (110) et d'un réceptacle (210) constitués d'une paroi (P) dans un matériau transparent ou translucide à conductivité élevée et résistant aux écarts de température, une cloison (C) séparant le réservoir (110) et le réceptacle (210), la cloison (C) étant le support du conduit (140) permettant à l'eutectique de s'écouler du réservoir vers le réceptacle, et (240) permettant à l'air de s'échapper du réceptacle vers le réservoir.

Les couvercles (115) et (215) sont constitués de telle façon que une fois fixés, ces couvercles (115) ou (215) forment une autre paroi permettant les échanges thermiques entre la substance (S) et le milieu ambiant de telle sorte que le rapport de volume de substance (S) à la surface d'échange thermique avec le milieu ambiant soit augmenté par rapport au dispositif représenté dans la figure 3.

Les éléments de conduits (140) et (240) sont identiques et remplissent la même fonction que dans le mode de réalisation précédent.

Dans cette exemple, la substance s'écoule du réservoir vers le réceptacle pour un produit $\Delta t \times \Delta\theta$ beaucoup plus faible que dans l'exemple précédent.

## Exemple de réalisation simplifiée.

Cet exemple est représenté dans la figure 5 ; la figure 5A représente un récipient muni d'un couvercle identique ou similaire à celui du dispositif de la figure 3, la figure 5B représente un dispositif similaire au réservoir de la figure 4 à l'exception près qu'aucun conduit ne permet l'écoulement de la substance. Ce type de dispositif simplifié permet de détecter l'existence d'une élévation de température, par observation de la liquéfaction de la substance, qui ne tient pas compte ni du $\Delta t$ ni du $\Delta\theta$. Il peut être utilisé seul ou associé avec un dispositif tel que représenté dans l'une des figures 3 ou 4 comme témoin de présence ou d'absence de décongélation.

Les figures 6A et 6B représentent, sans limitation de géométrie, des bouchons adaptables aux dispositifs des figures 3 et 5A.

La présente invention est également relative à un procédé de contrôle du maintien de la température dans une enceinte à température dirigée destinée à contenir des denrées périssables, entre deux moments $t_0$ et $t_1$, et consistant en :

a) la mise en place dans cette enceinte (sauf à ce qu'elle en soit déjà pourvue) d'un dispositif tel que décrit ci-dessus dans lequel la substance a une température de fusion choisie en fonction de la température dirigée requise, cette substance étant initialement, au temps $t_0$, à l'état entièrement solide dans le réservoir et, le cas échéant, dans un élément de conduit ;

b) l'observation au moment $t_1$ de la présence ou de l'absence de substance dans le réceptacle ;

c) le cas échéant la mesure de la quantité de matière dans le réceptacle et la corrélation de ladite mesure aux dépassements non autorisés de température dans l'enceinte à au moins certains moments compris entre les temps $t_0$ et $t_1$.

Le procédé selon l'invention est également caractérisé en ce que la substance a un point de fusion constant à des conditions de pression données et peut-être soit un mélange eutectique, soit une substance pure.

Dans le procédé de l'invention, la température de fusion de la substance est supérieure ou égale à la température maximale autorisée pour la conservation desdites denrées périssables ; selon ce même procédé le conduit de liaison est rempli de la substance et constitué d'un matériau à conductibilité thermique élevée notamment un métal ou un alliage métallique autorisant ainsi en cas de variation de températures une action rapide sur la substance entraînant sa fusion et son écoulement dans le réceptacle ; comme il a été dit plus haut selon que l'on souhaite détecter une élévation rapide et de courte durée, rapide et de longue durée, ou simplement de longue durée, l'homme du métier choisira dans la mise en oeuvre de son procédé, le dispositif approprié aux résultats recherchés, en ajustant le rapport entre la surface d'échange thermique et le volume de substance contenue dans ledit dispositif.

La géométrie du dispositif sera choisie selon que l'on souhaite détecter des ($\Delta t$ x $\Delta\theta$) élevés ou faibles comme illustré dans les figures 1 à 4. Il peut être choisi aussi de façon à détecter uniquement des $\Delta\theta$ positifs. indépendant du $\Delta t$ comme illustré dans les figures 5A et 5B.

De la même façon, les volumes des réservoirs et réceptacles sont choisis d'autant plus importants que l'on souhaite détecter des $\Delta t$ plus longs.

Une caractéristique complémentaire et originale du procédé de l'invention est que dans le cas d'un transfert observé de substance du réservoir au réceptacle au terme d'une opération de surveillance du respect des normes de températures, on peut après fusion complète de la matière encore solide contenue dans le réservoir, puis resolidification de la matière transférée, mettre en oeuvre ledit dispositif pour une autre opération de surveillance. sous réserve d'utiliser le réceptacle alors rempli de matière solide à titre de réservoir et l'ancien réceptacle alors vidé comme réceptacle.

Dans un perfectionnement du procédé de l'invention, plusieurs dispositifs peuvent être utilisés simultanément dans une même enceinte à température dirigée donnée, chaque dispositif étant lui-même caractérisé par le fait qu'il contient une substance ayant une température de fusion déterminée et différente des autres ; comme il a été expliqué plus haut, chaque température de fusion de la substance pourra être caractérisée par une couleur donnée ; ainsi, l'homme du métier pourra après le temps t1 déterminer l'intervalle de température maximale auquel l'enceinte a été soumise : si par exemple les substances dont les températures de fusion sont inférieures à - 8° ont été liquéfiées totalement ou partiellement alors que les substances dont les températures de fusion sont supérieures à - 5° ne l'ont pas été , on saura que la température d'ambiance de l'enceinte aura été portée pendant un certain temps entre - 8° et - 5°.

Le procédé de l'invention peut bien sûr être associé à tout procédé utilisant un autre système de contrôle de température de type thermomètre enregistreur ou des indicateurs autocollants de type ThawAlert fabriqués par la société Thermax, et commercialisés par "Etoile Internationale", 111 rue Cardinet - 75017 Paris, FRANCE.

Un autre exemple particulier d'une telle association est l'utilisation d'un dispositif selon l'invention avec et ce de façon optionnelle un dispositif tel que décrit dans la figure 5A ou la figure 5B. Ce dispositif est un témoin qui permet de vérifier par un simple coup d'oeil si une température donnée a été dépassée à un moment donné ou non, à partir du moment où la température critique à ne pas dépasser est la même que la température de fusion de la substance contenue dans le dispositif. Dans la figure 5A, ce dispositif témoin (T) est constitué d'un contenant constitué d'une paroi (110), d'un couvercle scellé ou non (130) et d'un espace intérieur (120). Deux représentations du couvercle sont figurées dans les figures 6A et 6B. Sur la paroi externe (110) ou le couvercle (130) est fixée une paroi munie de trous ou d'aspérités, ici de trous (145) à ladite paroi étant rattachée comme dans le réservoir de l'exemple précédent, une surface (150). L'eutectique où la substance préalablement introduite dans l'espace (120) est solidifié et maintenu dans la partie supérieure du témoin (T) dans l'espace compris entre le couvercle (130) et la surface (150). En cas de dépassement de la température critique qui est la température de fusion de la substance, ladite substance tombe par l'effet de la pesanteur dans la partie inférieure du dispositif.

La figure 5B est une représentation d'un dispositif présentant une surface d'échanges thermiques importants avec l'extérieur.

L'association d'un tel dispositif témoin avec le dispositif (D) tel que décrit et représenté dans la figure 3 ou 4 permet à la fois d'avoir une réponse de type binaire de dépassement ou non d'une température critique grâce au témoin (T), et une réponse quantitative quant à la durée et à la différence de température par le produit $\Delta t$ x $\Delta\theta$.

Dans certains cas d'utilisation simplifiée l'utilisation du témoin seul peut être suffisant si le simple fait d'avoir dépassé la température critique est suffisant pour prendre une décision quant à la qualité des denrées transportées.

Enfin, le dispositif (D) ou le témoin (T) peuvent être avantageusement utilisé avec des encres thermosensibles, changeant de couleur avec la température, tels ceux commercialisés par exemple par la société OMNIA CHEMIE, Gorsenkelhen 45. D-4030 Ratingen 1 (Germany).

L'invention concerne enfin l'utilisation pour contrôler le maintien de la température dans une enceinte à température dirigée entre deux moments $t_0$ et $t_1$ d'un dispositif constitué d'un réservoir d'un réceptacle et d'un ou deux éléments creux de liaison, le réservoir étant en amont du réceptacle en considération des forces de pesanteur, ledit réservoir et l'élément étant totalement ou partiellement remplis par une substance à l'état solide et ayant une température de fusion constante à une pression donnée et tel que défini plus haut.

L'invention concerne également l'utilisation d'un dispositif constitué d'un réservoir, d'un réceptacle, de deux éléments creux de liaison, le réservoir étant en amont du réceptacle en considération des forces de pesanteur, ledit réservoir étant partiellement rempli par une substance à l'état solide ayant une température de fusion constante à une pression donnée ; le réceptacle et le réservoir sont reliés par deux éléments creux de liaison dont l'un permet l'écoulement de la substance du réservoir vers le réceptacle et l'autre permet de façon simultanée le passage de l'air du réceptacle vers le réservoir.

Le dispositif de l'invention peut être utilisé soit seul soit en association avec différents dispositifs de même type mais ayant comme contenus des substances possédant des températures de fusion différentes, soit avec d'autres types de contrôle de température notamment des dispositifs permettant d'assurer une mémoire de la durée et des différences de températures auxquelles ont pu être soumises les enceintes contrôlées. Il sera en particulier intéressant, dans certains cas, d'utiliser ce type de dispositif en association avec des thermomètres enregistreurs ou encore avec des pastilles colorées dont la couleur change de façon irréversible en fonction de la température.

L'homme du métier pourra aisément concevoir ce type de dispositif soit intégré de manière irréversible dans l'enceinte dont la température doit être surveillée, soit de manière réversible afin d'assurer une réutilisation.

L'exemple d'utilisation ci-dessous illustre de façon précise mais non limitative l'intérêt du dispositif, du procédé et de l'utilisation de ce dispositif, objets de la présente invention.

Exemples d'utilisation

Se référant à la figure 1, un prototype témoin a été réalisé dans lequel le réservoir (1) et le réceptacle (2) sont en plastique transparent et ont une hauteur de l'ordre de 35 mm chacun et un diamètre de l'ordre de 16 mm ; le réservoir et le réceptacle sont reliés entre eux par un tube d'acier inoxydable de diamètre de l'ordre de 2,5 mm et de longueur de l'ordre de 30 mm. Le réservoir (1) a été rempli par de l'eau (4) puis maintenu à une température négative de telle sorte que toute l'eau soit transformée en glace. Ce témoin a ensuite été placé à une température ambiante de + 20°.

Après environ 4 minutes, la glace contenue dans le tube en acier commence à se liquéfier et à s'écouler goutte à goutte dans le réceptacle (2). Si l'on maintient le témoin à cette température ambiante, la glace continuera à se liquéfier et à s'écouler goutte à goutte; le temps nécessaire pour vider le réservoir (1) dans les conditions de géométrie décrites ci-dessus est de l'ordre de 35 mn.

Lorsque le témoin est placé à des températures différentes de 20°, la vitesse d'écoulement est alors sensiblement proportionnelle à l'écart de températures par rapport à 0°, vérifiant que le volume d'eau recueilli est proportionnel à l'écart de températures entre la glace et la température ambiante, ainsi qu'à la durée d'exposition à des températures pour lequel cet écart de température est positif.

Au contraire, le phénomène de liquéfaction s'arrête quand le témoin est replacé à une température négative.

La description qui précède montre clairement que ce système présente de nombreux avantages pour le contrôle de la température lors du transport de denrées périssables dans des enceintes à température dirigée, les principaux avantages étant et, sans limitation :

- le faible coût de réalisation de ce type de dispositif,
- la possibilité de réutiliser indéfiniment ce type de dispositif,
- la possibilité pour l'homme du métier d'adapter la géométrie du contenant du dispositif et la nature de la substance contenue dans le dispositif au cahier des charges défini pays par pays au niveau des bonnes pratiques d'hygiène dans le cas de transport de denrées périssables.

Ce dispositif peut être soit mobile avec cependant en option un dispositif de détrompage n'autorisant pas de retourner l'appareil lorsqu'il est en service, et peut être associé avec tout type de dispositif permettant de conserver la mémoire des différentes phases de température et de durée par lequel est passée l'ambiance de l'enceinte pendant la durée observée.

**Revendications**

1. Dispositif autonome de contrôle des écarts de température dans une enceinte à température dirigée, comportant un contenant comprenant un réservoir (1) relié à un réceptacle (2) dont les espaces intérieurs communiquent entre eux, au moins un moyen de remplissage du contenant, et un contenu constitué d'une matière solidifiée dont la température de fusion est constante et dont le volume total est inférieur au volume global du réservoir, ledit contenant étant au moins en partie constitué par une matière autorisant les échanges thermiques avec l'extérieur, caractérisé en ce que les espaces intérieurs communiquent par deux conduits à section plus réduite (140, 240), l'un des conduits (140) permet l'écoulement de la substance du réservoir vers le réceptacle et l'autre conduit (240) permet l'écoulement de l'air du réceptacle vers le réservoir.

2. Dispositif selon la revendication 1 caractérisé en ce que le réservoir est muni d'un moyen de rétention de la substance à l'état solide.

3. Dispositif selon la revendication 2 caractérisé en ce que le moyen de rétention est constitué d'une plaque munie de perforations ou d'aspérités, et d'une surface sensiblement perpendiculaire au sens de la pesanteur et dont le périmètre est tel que la substance fondue peut s'écouler vers le réceptacle le long de la paroi du réservoir sans risque d'obturation directe des deux conduits.

4. Dispositif selon une des revendications 1 à 3, caractérisé en ce qu'en position d'utilisation le réservoir est sensiblement à l'aplomb du réceptacle, le réceptacle pouvant à son tour devenir réservoir et vice-versa par retournement ou pivotement à 180°.

5. Dispositif selon l'une des revendications 1 à 4 caractérisé en ce que le moyen de remplissage est soit un orifice susceptible d'être bouché, soit un système étanche de fixation du réceptacle au réservoir.

6. Dispositif selon une des revendications 1 à 5, caractérisé en ce que la matière est un eutectique et que sa température de fusion est comprise entre -30°C et +20°C.

7. Dispositif selon l'une quelconque des revendications 1 à 6, caractérisé en ce que le réservoir et le réceptacle sont constitués d'un matériau transparent ou translucide de type plastique ou composite.

8. Dispositif selon la revendication 1, caractérisé en ce que le conduit de liaison est constitué d'un matériau à conductibilité thermique élevée, notamment un métal, un alliage métallique, une matière plastique ou une combinaison de ceux-ci.

9. Dispositif selon la revendication 1, caractérisé en ce que le conduit est rempli dans toute sa longueur par la matière.

10. Dispositif selon l'une des revendications 1 à 7 caractérisé en ce que le réceptacle comporte des graduations permettant la mesure du volume de substances écoulées du réservoir vers le réceptacle, ledit volume étant une fonction directe du produit $\Delta t$ x $\Delta\theta$, $\Delta\theta$ représentant la différence de température entre la température ambiante et la température de fusion de la substance, $\Delta t$ représentant la durée pendant laquelle $\Delta\theta$ est positif.

11. Procédé de contrôle du maintien de la température dans une enceinte à température dirigée entre des moments $t_0$ et $t_1$, ce procédé comportant :

   a) la mise en place dans cette enceinte (sauf à ce qu'elle en soit déjà pourvue) d'un dispositif selon l'une quelconque des revendications 1 à 8 dans lequel la matière a une température de fusion choisie en fonction de la température dirigée requise, cette matière étant initialement, au temps $t_0$, à l'état entièrement solide dans le réservoir et, le cas échéant, dans l'élément de conduit;
   b) l'observation au moment $t_1$ de la présence ou de l'absence de matière dans le réceptacle ;
   c) le cas échéant la mesure de la quantité de matière dans le réceptacle, laquelle peut être corrélée aux dépassements non autorisés de température dans l'enceinte à au moins certains moments compris entre les temps $t_0$ et $t_1$.

12. Procédé selon la revendication 11, caractérisé en ce que la température de fusion de la matière est supérieure ou égale à la température maximale autorisée pour la conservation desdites denrées périssables.

13. Procédé selon l'une des revendications 11 ou 12, caractérisé en ce que le réservoir et/ou le réceptacle sont en un matériau transparent ou translucide de type plastique ou composite.

14. Procédé selon l'une des revendications 11 à 13, caractérisé en ce qu'au moment $t_0$ le conduit est rempli avec la matière.

15. Procédé selon l'une des revendications 11 à 14 caractérisé en ce que la différence de pression entre le réceptacle et le réservoir est nulle, l'écoulement de la substance du réservoir vers le réceptacle étant compensée par l'échappement de l'air du réceptacle vers le réservoir.

16. Procédé selon l'une des revendications 11 à 15, caractérisé en ce que le dispositif a une géométrie caractérisée par le rapport entre la surface d'échappement thermique avec l'enceinte à température dirigée et le volume de substance déterminée en fonction du produit [$\Delta t$ x $\Delta\theta$] que l'on souhaite détecter, $\Delta\theta$ étant le dépassement de température entre la température maximum autorisée dans l'enceinte et la température de fusion de la matière $\Delta t$ étant la durée de ce dépassement de température $\Delta\theta$.

17. Procédé selon l'une quelconque des revendications 11 à 16, caractérisé en ce que le volume de matière recueilli dans le réceptacle est une fonction du produit [$\Delta\theta$ x $\Delta t$]:

- Δθ représentant la différence de température entre la température ambiante et la température de fusion de la substance ;
- Δt représentant la durée pendant laquelle Δθ est positif.

18. Procédé selon l'une des revendications 11 à 17, caractérisé en ce que les volumes des réservoirs et réceptacles sont choisis d'autant plus importants que l'on souhaite détecter des Δt plus longs.

19. Procédé selon l'une quelconque des revendications 11 à 18, caractérisé en ce que dans le cas d'un transfert observé de matière du réservoir dans le réceptacle pendant une opération de surveillance du respect des normes de températures, on peut après liquéfaction complète de la matière encore solide contenue dans le réservoir, puis resolidification, mettre en oeuvre ledit dispositif pour une autre opération de surveillance, sous réserve d'utiliser le réceptacle alors rempli de matière solide à titre de réservoir et l'ancien réceptacle alors vidé comme réservoir.

20. Procédé selon l'une quelconque des revendications 11 à 19, caractérisé en ce qu'un ou plusieurs dispositifs peuvent être utilisés dans une enceinte à température dirigée donnée, chaque dispositif étant lui-même caractérisé par une température de fusion déterminée de la matière.

21. Procédé selon l'une quelconque des revendications 11 à 20, caractérisé en ce que le ou les dispositifs peuvent être en outre associés à un autre système de contrôle de température, tel un thermomètre-enregistreur, ou des indicateurs autocollants ou des encres thermosensibles.

22. Procédé selon l'une quelconque des revendications 11 à 21 caractérisé en ce qu'un dispositif selon l'une des revendications 1 à 8 peut être utilisé avec un dispositif témoin constitué d'un réservoir constitué d'une matière autorisant les échanges thermiques avec l'extérieur et d'un contenu constitué d'une matière solidifiée à température de fusion constante et maintenue dans la partie supérieure du réservoir.

23. Utilisation pour contrôler le maintien de la température dans une enceinte à température dirigée et destinée à contenir des denrées périssables, entre les moments $t_0$ et $t_1$, d'un dispositif selon l'une des revendications 1 à 10.

24. Utilisation selon la revendication 23, caractérisée en ce que l'enceinte à température dirigée contient un ou plusieurs dispositifs, chacun de ces dispositifs étant lui-même caractérisé par une température de fusion déterminée de substance.

25. Utilisation selon l'une des revendications 23 ou 24, caractérisée en ce que le ou les dispositifs peuvent être en outre associés à d'autres systèmes de contrôle de température, tels un thermomètre-enregistreur, des indicateurs autocollants ou des encres thermosensibles.

26. Utilisation selon l'une des revendications 23 à 25, caractérisée en ce qu'après la liquéfaction de la matière et retournement du dispositif, le dit dispositif est utilisable à nouveau selon un procédé de l'une quelconque des revendications 11 à 22.

**Patentansprüche**

1. Unabhängige Vorrichtung zur Kontrolle von Temperaturunterschieden in einer Temperaturkontrollkammer, die einen Behälter enthält, der aus einem Tank (1) besteht, der mit einem Auffangbecken (2) verbunden ist, dessen innere Zwischenräume miteinander in Verbindung stehen, mindestens einem in dem Behälter befindlichen Füllmittel und einem Inhalt, der aus festem Material besteht, dessen Schmelztemperatur konstant ist und dessen Gesamtvolumen unter dem Gesamtvolumen des Tanks ist, wobei besagter Behälter mindestens teilweise aus einem Material besteht, das den Wärmeaustausch nach außen ermöglicht, dadurch gekennzeichnet, daß die inneren Zwischenräume durch zwei Leitungen mit vermindertem Querschnitt (140, 240) miteinander verbunden sind, wobei eine der Leitungen (140) den Abfluß der im Tank befindlichen Substanz in Richtung des Auffangbeckens ermöglicht und die andere Leitung (240) den Abfluß der Luft vom Auffangbecken in Richtung des Tanks ermöglicht.

2. Vorrichtung gemäß des Patentanspruchs 1, dadurch gekennzeichnet, daß der Tank mit einer Rückhaltevorrichtung für die in festem Zustand befindliche Substanz ausgerüstet ist.

3. Vorrichtung gemäß des Patentanspruchs 2, dadurch gekennzeichnet, daß die Rückhaltevorrichtung aus einer Platte besteht, die mit Lochungen oder Unebenheiten und einer Oberfläche deutlich senkrecht zur Schwerkraft ausgerichtet ausgerüstet ist und deren Umfang dergestalt ist, daß die geschmolzene Substanz in Richtung auf das Auffangbecken entlang der Wand des Tanks fließen kann, ohne daß das Risiko der direkten Verstopfung der beiden Leitungen besteht.

4. Vorrichtung gemäß einer der Patentansprüche 1 - 3, dadurch gekennzeichnet, daß der Tank beim Betrieb deutlich senkrecht zum Auffangbecken steht, wobei das Auffangbecken seinerseits durch Kippen oder Schwenken um 180° zum Tank und umgekehrt werden kann.

5. Vorrichtung gemäß einer der Patentansprüche 1 - 4, dadurch gekennzeichnet, daß das Füllmittel entweder eine Öffnung/einen Anschluß, die/der zum Verschließen geeignet ist, oder ein undurchlässiges System zur Befestigung des Auffangbeckens am Tank ist.

6. Vorrichtung gemäß einer der Patentansprüche 1 - 5, dadurch gekennzeichnet, daß das Material ein Eutektikum ist und daß dessen Schmelztemperatur zwischen -30° C und +20° C liegt.

7. Vorrichtung gemäß irgendeinem der Patentansprüche 1 - 6, dadurch gekennzeichnet, daß der Tank und das Auffangbecken aus einem transparenten oder lichtdurchlässigen Material aus Kunststoff oder Verbündkunststoff gebildet sind.

8. Vorrichtung gemäß des Patentanspruchs 1, dadurch gekennzeichnet, daß die Verbindungsleitung aus einem Material mit erhöhter Wärmeleitfähigkeit, insbesondere aus einem Metall, einer metallischen Legierung, einem Kunststoffmaterial oder aus einer Kombination daraus besteht.

9. Vorrichtung gemäß des Patentanspruchs 1, dadurch gekennzeichnet, daß die Leitung in ihrer gesamten Länge mit dem Material ausgefüllt ist.

10. Vorrichtung gemäß einer der Patentansprüche 1 - 7, dadurch gekennzeichnet, daß das Auffangbecken Maßeinteilungen aufweist, die die Messung des Volumens von Substanzen ermöglichen, die vom Tank in Richtung des Auffangbeckens fließen, wobei besagtes Volumen eines direkte Funktion des Produkts $\Delta t$ x $\Delta 0$ hat, wobei $\Delta 0$ den Temperaturunterschied zwischen der Umgebungstemperatur und der Schmelztemperatur der Substanz und $\Delta t$ die Dauer darstellt, während der $\Delta 0$ positiv ist.

11. Kontrollverfahren zur Aufrechterhaltung der Temperatur in einer Temperaturkontrollkammer zwischen den Momenten t0 und t1, wobei dieses Verfahren umfaßt:

a) den Einbau einer Vorrichtung in diese Kammer (abgesehen von dem, was bereits vorgesehen ist) gemäß irgendeiner der Patentansprüche 1 - 8, in der das Material eine Schmelztemperatur hat, die entsprechend der erforderlichen Kontrolltemperatur gewählt wurde, wobei sich dieses Material zum Zeitpunkt t0 anfänglich in gänzlich festem Zustand im Tank und, falls erforderlich, in der Leitung befindet;

b) die Beobachtung des Vorhanden- und Nichtvorhandenseins von Material im Auffangbecken zum Zeitpunkt t1;

c) gegebenenfalls die Messung der in dem Auffangbecken befindlichen Menge an Material, wobei diese bei unzulässigen Überschreitungen der Temperatur in der Kammer zumindest zu gewissen Momenten, die zwischen den Zeitpunkten t0 und t1 liegen, korrelieren kann.

12. Verfahren gemäß des Patentanspruchs 11, dadurch gekennzeichnet, daß die Schmelztemperatur des Materials größer oder gleich der maximalen Temperatur ist, die für die Konservierung der besagten leichtverderblichen Lebensmittel zulässig ist.

13. Verfahren gemäß einer der Patentansprüche 11 oder 12, dadurch gekennzeichnet, daß der Tank und/oder das Auffangbecken aus transparentem oder lichtdurchlässigem Kunststoff oder Verbundkunststoff ist/sind.

14. Verfahren gemäß einer der Patentansprüche 11 - 13, dadurch gekennzeichnet, daß die Leitung zum Zeitpunkt t0 mit dem Material gefüllt ist.

15. Verfahren nach einem der Patentansprüche 11 - 14, dadurch gekennzeichnet, daß der Druckunterschied zwischen dem Auffangbecken und dem Tank null ist, wobei das Abfließen der in dem Tank befindlichen Substanz in Richtung des Auffangbeckens durch das Entweichen der Luft aus dem Auffangbecken in Richtung des Tanks kompensiert wird.

16. Verfahren nach einem der Patentansprüche 11 - 15, dadurch gekennzeichnet, daß die Vorrichtung eine Gestaltung aufweist, die durch den Abstand zwischen der Wärmeentweichungsoberfläche der Kontrolltemperaturkammer und dem Volumen der ermittelten Substanz entsprechend des Produkts ($\Delta t$ x $\Delta 0$), das man bestimmen möchte, charakterisiert ist, wobei $\Delta 0$ die Temperaturüberschreitung zwischen der maximal zulässigen Temperatur in der Kammer und der Schmelztemperatur des Materials und $\Delta t$ die Dauer dieser Temperaturüberschreitung $\Delta 0$ ist.

17. Verfahren gemäß irgendeiner der Patentansprüche 11 - 16, dadurch gekennzeichnet, daß das Volumen des Materials, das in dem Auffangbecken angesammelt worden ist, eine Funktion des Produkts ($\Delta 0$ x $\Delta t$) ist,

- wobei $\Delta 0$ den Temperaturunterschied zwischen der Umgebungstemperatur und der Schmelztemperatur der Substanz darstellt;

- wobei Δt die Dauer darstellt, während der Δ0 positiv ist.

18. Verfahren gemäß einem der Patentansprüche 11 - 17, dadurch gekennzeichnet, daß die Volumen der Tanks und der Auffangbecken gewählt werden, um so mehr als es wichtig ist, weil man die längsten Δ t feststellen möchte.

19. Verfahren gemäß irgendeinem der Patentansprüche 11 - 18, dadurch gekennzeichnet, daß man im Falle eine beobachteten Überführung von Material aus dem Tank hin zum Auffangbecken während einer Überwachungstätigkeit der Einhaltung der Temperaturnormen und nach der vollständigen Verflüssigung des noch festen Materials, das sich im Tank befindet, und erneuter Verfestigung des Materials die besagte Vorrichtung für eine andere Überwachungstätigkeit vorbehaltlich der Nutzung des so mit festem Material gefüllten Auffangbeckens als Tank und der Nutzung des einstigen und jetzt leeren Auffangbeckens als Tank einsetzen kann.

20. Verfahren gemäß irgendeinem der Patentansprüche 11 - 19, dadurch gekennzeichnet, daß eine oder mehrere Vorrichtungen in einer gegebenen Kontrolltemperaturkammer verwendet werden kann/ können, wobei jede Vorrichtung selbst durch eine durch das Material festgestellte Schmelztemperatur charakterisiert ist.

21. Verfahren gemäß irgendeiner der Patentansprüche 11 - 20, dadurch gekennzeichnet, daß die Vorrichtung/en darüber hinaus mit einem anderen Temperaturkontrollsystem verbunden sein kann/können, so wie zum Beispiel mit einem-Temperaturaufzeichner oder mit einem selbsthaftenden Anzeigegerät oder mit Thermotinten.

22. Verfahren gemäß irgendeiner der Patentansprüche 11 - 21, dadurch gekennzeichnet, daß eine Vorrichtung gemäß einem der Patentansprüche 1 - 8 mit einer Kontrolleinrichtung verwendet werden kann, die aus einem Tank gebildet ist, der aus einem Material, das den Wärmeaustausch mit außen ermöglicht, und aus einem Inhalt aus festem Material mit einer konstanten Schmelztemperatur besteht, die im oberen Teil des Tanks aufrechterhalten wird.

23. Methode zur Kontrolle der Aufrechterhaltung der Temperatur in einer Temperaturkontrollkammer, die dazu bestimmt ist, leichtverderbliche Lebensmittel zwischen den Zeitpunkten t0 und t1 einer Vorrichtung gemäß einer der Patentansprüche 1 - 11 aufzunehmen.

24. Methode gemäß des Patentanspruchs 23, dadurch gekennzeichnet, daß die Temperaturkontrollkammer eine oder mehrere Vorrichtungen enthält, wobei jede dieser Vorrichtungen selbst durch eine durch die Substanz festgestellte Schmelztemperatur charakterisiert ist.

25. Methode gemäß einer der Patentansprüche 23 oder 24, dadurch gekennzeichnet, daß die Vorrichtungen darüber hinaus mit anderen Temperaturkontrousystemen verbunden werden können, so wie zum Beispiel mit einem Temperaturaufzeichner, einem selbsthaftenden Anzeigegerät oder mit Thermotinten.

26. Methode gemäß einer der Patentansprüche 23 - 25, dadurch gekennzeichnet, daß nach der Verflüssigung des Materials und des Kippens der Vorrichtung die besagte Vorrichtung erneut gemäß irgendeinem der Patentansprüche 11 - 22 verwendet werden kann.

## Claims

1. Self-contained device for controlling temperature variations in a temperature-controlled enclosure, comprising a container comprising a reservoir (1) connected to a receptacle (2), the interior spaces of which communicate with each other, at least one means of filling the container, and a content consisting of a solidified substance whose melting point is constant and whose total volume is less than the overall volume of the reservoir, the said container consisting at least in part of a substance that allows heat exchange with the outside, characterized in that the interior spaces communicate via two ducts of smaller cross-section (140, 240), one of the ducts (140) allows the substance to flow from the reservoir towards the receptacle and the other duct (240) allows air to flow from the receptacle towards the reservoir.

2. Device according to Claim 1, characterized in that the reservoir is provided with a means of retaining the solid-state substance.

3. Device according to Claim 2, characterized in that the retaining means consists of a plate with perforations or roughnesses and with a surface approximately perpendicular to the direction of gravity and the perimeter of which is such that the melted substance can flow towards the receptacle along the wall of the reservoir without the risk of directly clogging the two ducts.

4. Device according to one of Claims 1 to 3, characterized in that in the position of use, the reservoir is substantially plumb with the receptacle, it being possible for the receptacle in its turn to become the reservoir and vice versa, by inversion or pivoting through 180°.

5. Device according to one of Claims 1 to 4, characterized in that the filling means is either an orifice which can be plugged, or a leaktight system for attaching the receptacle to the reservoir.

6. Device according to one of Claims 1 to 5, characterized in that the substance is a eutectic and that its melting point is between -30°C and +20°C.

7. Device according to any one of Claims 1 to 6, characterized in that the reservoir and the receptacle are made of a transparent or translucent substance of the plastic or composite type.

8. Device according to Claim 1, characterized in that the connecting duct is made of a material of high thermal conductance, especially a metal, a metal alloy, a plastic or a combination of these.

9. Device according to Claim 1, characterized in that the duct is filled with the substance along its entire length.

10. Device according to one of Claims 1 to 7, characterized in that the receptacle has graduations enabling to measure the volume of substances that have flowed from the reservoir to the receptacle, the said volume being a direct function of the product $\Delta t \times \Delta \theta$, $\Delta \theta$ meaning the difference in temperature between ambient temperature and the melting point of the substance, $\Delta t$ meaning the time for which $\Delta \theta$ is positive.

11. Method for controlling the maintaining of the temperature in a temperature-controlled enclosure between instants $t_0$ and $t_1$, this method comprising:

   a) the installation within this enclosure (unless it is already provided with one) of a device according to any one of Claims 1 to 8, in which the substance has a melting point chosen as a function of the controlled temperature desired, this substance being initially, at the instant $t_0$, in the entirely solid state in the reservoir and, as appropriate, in the duct element;
   b) observing, at the instant $t_1$, the presence or absence of substance in the receptacle;
   c) if necessary, measuring the amount of substance in the receptacle, which can be correlated with unauthorized excesses of temperature in the enclosure at least at certain instants between the times $t_0$ and $t_1$.

12. Method according to Claim 11, characterized in that the melting point of the substance is higher than or equal to the maximum temperature authorized for preserving the said perishable foodstuffs.

13. Method according to either of Claims 11 and 12, characterized in that the reservoir and/or the receptacle are made of a transparent or translucent material of the plastic or composite type.

14. Method according to one of Claims 11 to 13, characterized in that the duct is full of the substance at the instant $t_0$.

15. Method according to one of Claims 11 to 14, characterized in that the pressure difference between the receptacle and the reservoir is zero, the flow of substance from the reservoir to the receptacle being compensated for by the escape of air from the receptacle to the reservoir.

16. Method according to one of Claims 11 to 15, characterized in that the device has a geometry characterized by the ratio between the area for heat escape with the temperature-controlled enclosure and the volume of substance determined as a function of the product $[\Delta t \times \Delta \theta]$ that it is wished to detect, $\Delta \theta$ being the excess of temperature between the maximum authorized temperature in the enclosure and the melting point of the substance, $\Delta t$ being the time for which this temperature excess $\Delta \theta$ lasts.

17. Method according to any one of Claims 11 to 16, characterized in that the volume of substance collected in the receptacle is a function of the product $[\Delta \theta \times \Delta t]$,

   - $\Delta \theta$ meaning the difference in temperature between ambient temperature and the melting point of the substance;
   - $\Delta t$ meaning the time for which $\Delta \theta$ is positive.

18. Method according to one of Claims 11 to 17, characterized in that the volumes of the reservoirs and receptacles are chosen all the larger, for the $\Delta t$ to be detected are desired to be the longer.

19. Method according to any one of Claims 11 to 18, characterized in that in the case of an observed transfer of substance from the reservoir to the receptacle, during a monitoring process for compliance with temperature standards, it is possible, after that any still solid substance contained in the reservoir has been fully liquefied and then resolidified, to use the said device for another monitoring process, provided that the receptacle which is now full of solid substance is used as a reservoir and the former reservoir which is now empty is used as a receptacle.

**20.** Method according to any one of Claims 11 to 19, characterized in that one or more devices can be used in a given temperature-controlled enclosure, each device being itself characterized by a given melting point of substance.

**21.** Method according to any one of Claims 11 to 20, characterized in that the device or devices may furthermore be combined with another temperature-control system, such as a recording thermometer, or self-adhesive indicators or thermo-sensitive inks.

**22.** Method according to any one of Claims 11 to 21, characterized in that a device according to one of Claims 1 to 8 can be used with an indicator device consisting of a reservoir consisting of a substance allowing heat exchange with the outside and with a content consisting of a solidified substance or constant melting point retained in the upper part of the reservoir.

**23.** Use of a device according to one of Claims 1 to 10 for controlling the maintaining of the temperature in a temperature-controlled enclosure intended to contain perishable foodstuffs between the instants $t_0$ and $t_1$.

**24.** Use according to Claim 23, characterized in that the temperature-controlled enclosure contains one or more devices, each of these devices being in itself characterized by a given melting point of substance.

**25.** Use according to either of Claims 23 and 24, characterized in that the device or devices may furthermore be combined with other temperature-control systems, such as a recording thermometer, self-adhesive indicators or thermo-sensitive inks.

**26.** Use according to one of Claims 23 to 25, characterized in that after the substance is liquefied and the device has been inverted, the said device can be used again according to a method of any one of Claims 11 to 22.

## FIG.1

t0          t1

## FIG.2

-2a-

-2b-

-2c-

FIG_3

FIG_4

FIG_5A

FIG.6A

FIG_5B

FIG_6B